(19) Europäisches Patentamt
European Patent Office
Office européen des brevets

(11) **EP 4 575 903 A1**

(12) **EUROPEAN PATENT APPLICATION**

(43) Date of publication:
**25.06.2025 Bulletin 2025/26**

(21) Application number: **24220150.7**

(22) Date of filing: **16.12.2024**

(51) International Patent Classification (IPC):
***G06N 3/0495*** (2023.01) ***G06N 3/09*** (2023.01)
*G06T 5/60* (2024.01) *G06T 5/70* (2024.01)

(52) Cooperative Patent Classification (CPC):
**G06N 3/09; G06N 3/0495; G06T 5/60;**
G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 JP 2023216193**

(71) Applicant: **CANON KABUSHIKI KAISHA**
**Tokyo 146-8501 (JP)**

(72) Inventor: **HIRADO, Yasuharu**
**Tokyo, 146-8501 (JP)**

(74) Representative: **TBK**
**Bavariaring 4-6**
**80336 München (DE)**

(54) **INFORMATION PROCESSING APPARATUS, INFORMATION PROCESSING METHOD, AND NON-TRANSITORY COMPUTER-READABLE STORAGE MEDIUM**

(57) An information processing apparatus configured to process target data by a neural network, the information processing apparatus comprising: an input data acquisition means configured to acquire the target data; a supervisory data acquisition means configured to acquire supervisory data; and a learning means configured to perform learning so as to reduce an error between output data obtained by inputting, to the neural network, and processing the target data and the supervisory data, and updates a parameter of the neural network, wherein the supervisory data acquisition means acquires the supervisory data subjected to depth conversion processing of converting a value of the supervisory data with a resolution matching a characteristic of the target data in a case where a bit depth of the supervisory data is a second bit depth smaller than a first bit depth of the target data.

**FIG. 2**

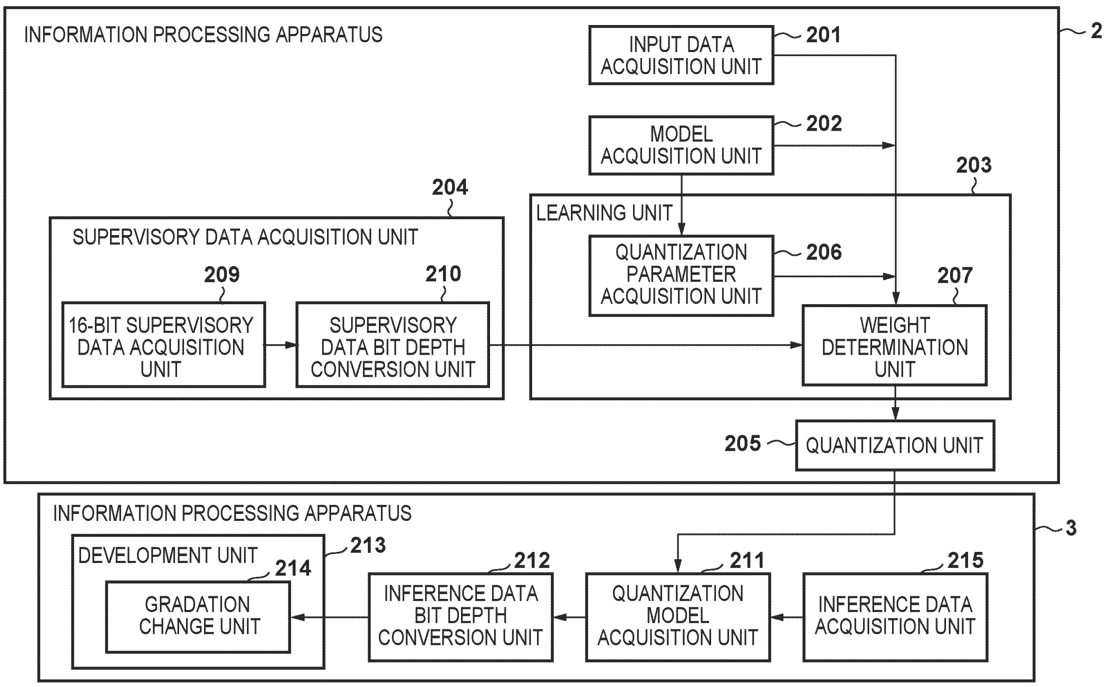


EP 4 575 903 A1

## Description

### BACKGROUND OF THE INVENTION

#### Field of the Invention

The present invention relates to an information processing apparatus, an information processing method, and a non-transitory computer-readable storage medium.

#### Description of the Related Art

In recent years, in data processing such as image processing technology for improving image quality of an image, a technique using a neural network (NN) has been actively developed. For example, there is a technology for achieving image quality enhancement image processing such as noise removal, blur removal, and super-resolution by using the NN (Restormer: Efficient Transformer for High-Resolution Image Restoration, Inception Institute of AI, Nov, 18, 2021, (searched on December 13, 2023), Internet <URL: https://openaccess.thecvf.com/content/CVPR2022/papers/Zamir_Restormer_Effic ient_Transformer_for_High-Resolution_Image_Restoration_CVPR_2022_paper.pdf>).

Since recent the NN has a large number of layers and a large amount of calculation, a high-speed computer is used at the time of learning. However, in data processing in post-learning inference, calculation resources are often limited, and a more efficient calculation method is required.

As a calculation method at the time of efficient inference, a method of performing calculation by quantizing the weights and the feature amounts of the NN into low-precision numerical values is known. Performing quantization enables even equipment having poor calculation resources such as embedded equipment to operate. Even in a general-purpose computer, there is a case where a high-throughput calculation instruction such as a single instruction multiple data (SIMD) instruction can be used by quantizing the weights of the NN or the like, and speeding up can be expected.

### SUMMARY OF THE INVENTION

However, by quantizing the weights, the feature amounts, and the like of the NN into low-precision numerical values, precision of data such as the resolution of an image output by the NN generally decreases. In particular, in a case where a weight or the like is quantized at a bit depth smaller than a bit depth of original data, precision of data such as gradation of an image to be output becomes rough, and deterioration thereof remarkably appears. For example, regarding an NN intended for image quality enhancement image processing, in a case where an input image to a target NN is a RAW image of 12-bit to 14-bit, if the weights, the feature amounts, and the like of the NN are quantized to 8-bit, the image quality enhancement image output by the NN is also output in 8-bit, and thus it is not possible to express the gradation of the original image. The RAW image is finally converted into an 8-bit JPEG image or the like by development processing, but since the gradation of the RAW image that is an original image is rough, the converted 8-bit JPEG image also has a rough gradation as a result, and an image with deteriorated image quality is output.

According to the present invention, final data deterioration is suppressed even when quantization is performed at a bit depth smaller than a bit depth of processing target data in the NN used for data processing such as image quality enhancement image processing.

The present invention in its first aspect provides an information processing apparatus as specified in claims 1 to 11.

The present invention in its second aspect provides an information processing method as specified in claim 12.

The present invention in its third aspect provides a non-transitory computer-readable storage medium as specified in claim 13.

Further features of the present invention will become apparent from the following description of exemplary embodiments (with reference to the attached drawings).

### BRIEF DESCRIPTION OF THE DRAWINGS

FIG. 1 is a block diagram illustrating a hardware configuration of an information processing apparatus of a first embodiment.

FIG. 2 is a functional block diagram illustrating a functional configuration of the information processing apparatus of the first embodiment.

FIG. 3A is an example of a lookup table used for bit depth conversion of the first embodiment.

FIG. 3B is an example of a tone curve applied in gradation change in a gradation change unit of the first embodiment.
FIG. 4 is an example of a model of an NN of the first embodiment.
FIG. 5 is a flowchart showing an example of learning processing of the NN of the first embodiment.
FIG. 6 is a flowchart showing an example of inference and development processing of the NN of the first embodiment.
FIG. 7A is a graph showing an equation when an unsigned integer type 16-bit image of a second embodiment is converted into an unsigned integer type 8-bit image.
FIG. 7B is an example of a tone curve used in gradation processing of the gradation change unit of the second embodiment.
FIG. 7C is a graph of Equation (3) when an unsigned integer type 8-bit image of the second embodiment is converted into an unsigned integer type 16-bit image.

## DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

The present invention will be described below in detail based on preferred embodiments thereof with reference to the accompanying drawings. Note that the configurations illustrated in the following embodiments are merely examples, and the present invention is not limited to the illustrated configurations.
FIG. 1 is a block diagram illustrating an example of the hardware configuration according to the present embodiment. An information processing apparatus 1 may be, for example, a computer. As illustrated in the figure, the information processing apparatus 1 includes a CPU 11, a ROM 12, a RAM 13, a secondary storage device 14, an input device 15, a display device 16, and a connection bus 17.
The CPU 11 is an abbreviation for central processing unit, and controls the information processing apparatus 1 by reading a control program stored in the ROM 12, developing the control program in the RAM 13, and executing the control program. The CPU 11 includes an SIMD instruction that collectively calculates 8-bit integer types, and uses the SIMD instruction in inference processing described later. The information processing apparatus 1 may include other processors such as a micro processing unit (MPU), a graphics processing unit (GPU), and a quantum processing unit (QPU) in place of the CPU 11 or in addition to the CPU 11.
The ROM 12 is an abbreviation for read only memory, and is a nonvolatile memory. The ROM 12 stores a control program, various parameter data necessary for executing the program, and the like. The control program is executed by the CPU 11 and implements each processing described later.
The RAM 13 is an abbreviation for random access memory, and is a volatile memory. The RAM 13 temporarily stores an image, a control program, and an execution result thereof.
The secondary storage device 14 rewritably stores various programs and data such as image data used for the processing of the present embodiment. The secondary storage device 14 is, for example, a nonvolatile storage device such as a hard disk drive (HDD), a solid state drive (SSD), or a flash memory. The secondary storage device 14 stores, for example, an image used for calculation of the NN, a control program such as a model of the NN, a processing result of the control program, and the like. The information stored in the secondary storage device 14 is output to the RAM 13 in response to a request from the CPU 11 or the like, and is used by the CPU 11 to execute a program.
The input device 15 serves as an interface with the outside such as a user. The input device 15 may be a mouse, a keyboard, or the like that acquires input from the user.
The display device 16 is, for example, a monitor such as a liquid crystal display and an organic electro luminescence (EL) display. The display device 16 displays a processing result of the program, an image, and the like.
The connection bus 17 connects the CPU 11, the ROM 12, the RAM 13, the secondary storage device 14, the input device 15, and the display device 16 constituting the information processing apparatus 1, and performs data communication with one another.
In the present embodiment, the CPU 11 executes software or a program to implement processing and functions described later, but some or all of the processing and functions may be implemented by hardware. The hardware may be, for example, a dedicated circuit (application specific integrated circuit (ASIC), field programmable gate array (FPGA)), a processor (reconfigurable processor, digital signal processor (DSP)), and the like.
The information processing apparatus 1 may acquire, via a network or various storage media, software or a program describing functions and processing described later, and execute the software or the program on a processing apparatus (processor such as a CPU and a GPU) such as a personal computer.

FIG. 2 is a functional block diagram illustrating an example of the functional configuration regarding an information processing apparatus 2 related to learning and an information processing apparatus 3 related to inference of the present embodiment. The hardware configuration of each of the information processing apparatus 2 and the information processing apparatus 3 is similar to that of the information processing apparatus 1. The information processing apparatus 2 and the information processing apparatus 3 may be implemented by one information processing apparatus.

Based on image data, the information processing apparatus 2 causes a model of the NN to learn, updates parameters such as a weight of the model of the NN, and quantizes the model. The image data is an example of target data. Note that the term "image" may be used as a term including a moving image, a still image, a video, and data thereof. The information processing apparatus 2 has functions of an input data acquisition unit 201, a model acquisition unit 202, a learning unit 203, a supervisory data acquisition unit 204, and a quantization unit 205.

The input data acquisition unit 201 acquires input data to be input to the model of the NN acquired by the model acquisition unit 202. The input data acquisition unit 201 acquires an image as input data, for example. For example, the input data acquisition unit 201 acquires, as input data, an image in which a 14-bit RAW image is converted into an unsigned integer type 16-bit type.

The model acquisition unit 202 acquires a model of the NN. FIG. 4 is an example of a model of the NN. The model acquired by the model acquisition unit 202 includes one or a plurality of layers 401, 402, and 403 in which, for example, a CNN layer and a ReLU layer are combined. Here, CNN is an abbreviation for convolutional neural network (convolutional NN), and is a type of NN. ReLU is an abbreviation of rectified linear unit, and is a type of activation function. Here, the unit of the layer is a set from the NN (here, CNN layer) to the activation function (here, ReLU layer). For example, the layer 401 includes a CNN layer 404 and an ReLU layer 405, and a set of these layers is defined as a layer of one unit. The layer 402 and the layer 403 are similar to the layer 401, and two layers of the CNN layer and the ReLU layer are regarded as a layer of one unit. The output of a layer described below refers to the output of the layers 401, 402, and 403 in units. When referring to layer i, i refers to an index of one unit of the layer. In the example of FIG. 4, a layer 1 corresponds to the layer 401, a layer 2 corresponds to the layer 402, and a layer 3 corresponds to the layer 403. Note that the layer 401 is an input layer and performs convolution calculation on an input image. The layer 403 is an output layer, and outputs an image from which noise of the input image has been removed. Note that the configuration of the NN is not limited to the number and type of the layers in FIG. 4. The number of layers may be, for example, four or more. As the type of layers, a pooling layer, skip connection, and the like may be applied. The model of the NN is not necessarily a learned model. When not a learned model, the model of the NN may be initialized by a known weight initialization technique of an NN such as an initialization technique of a document (Delving Deep into Rectifiers: Surpassing Human-Level Performance on ImageNet Classification, Kaiming He, Xiangyu Zhang, Shaoqing Ren, Jian Sun; Proceedings of the IEEE International Conference on Computer Vision (ICCV), 2015, pp. 1026-1034. (searched on December 13, 2023), Internet <URL: https://arxiv.org/pdf/1502.01852.pdf>).

The learning unit 203 has a function for learning the model of the NN acquired by the model acquisition unit 202. The learning unit 203 includes a quantization parameter acquisition unit 206 and a weight determination unit 207.

The quantization parameter acquisition unit 206 acquires a quantization parameter $q_i$ used for quantization of each layer of the model of the NN acquired by the model acquisition unit 202. In a case of not being necessary to distinguish as to which layer a quantization parameter is of, it is described as a quantization parameter q. In the example of FIG. 4, since each layer is output through the ReLU layer, the output values is 0 or more. In this case, for example, when q = 4, the upper limit of the output range of each layer is 4, and the output range of each layer of the single precision 32-bit NN is [0, 4]. If the precision is 8-bit, the output value of the layer is quantized width (bin width) = 4/256 = 0.015625. For example, assuming that the output value of the layer of the single precision 32-bit NN is 3.1, the output value when quantized to 8-bit is 3.09375. When this output value is converted into an 8-bit integer in the range of [0, 255], 3.09375 × 256/4 = 198. The quantization parameter q is determined from a statistical value of the output values of each layer by inferring the model of the NN with the input data in advance. For example, the quantization parameter q may be the maximum value of the output values of the layers, or may be a value corresponding to 99.9% by sorting the output values of the layers in ascending order. In the present embodiment, each layer of the model of the NN is quantized to 8-bit.

The weight determination unit 207 updates and determines, by learning, the weights of the model of the NN acquired by the model acquisition unit 202. For example, the weight determination unit 207 performs inference processing on an image acquired by the input data acquisition unit 201 with respect to the model of the NN, outputs an output image (output data), and calculates a loss (objective function) between the supervisory data acquired by the supervisory data acquisition unit 204 and the output image. In the present embodiment, the objective function is a square error, which is an example of an error. Thereafter, the weight determination unit 207 calculates a gradient using an error back propagation method using the calculated loss, performs learning so as to reduce the loss, and calculates an update amount of the weights of the model. The weight determination unit 207 updates the weights of the model of the NN by the update amounts. As a learning method of weight update, a known learning method of NN may be applied, and detailed description will be omitted.

The supervisory data acquisition unit 204 acquires and converts supervisory data. The supervisory data acquisition unit 204 includes a 16-bit supervisory data acquisition unit 209 and a supervisory data bit depth conversion unit 210.

The 16-bit supervisory data acquisition unit 209 acquires data to be input to the supervisory data bit depth conversion unit 210. The 16-bit supervisory data acquisition unit 209 acquires, for example, an image in which a 14-bit RAW image is converted into an unsigned integer type 16-bit. The image is a high-quality image from which noise of the image acquired by the input data acquisition unit 201 has been removed.

The supervisory data bit depth conversion unit 210 executes depth conversion processing of converting an unsigned integer type 16-bit image acquired by the 16-bit supervisory data acquisition unit 209 into an unsigned integer type 8-bit image. 16-bit is an example of the first bit depth, and 8-bit is an example of the second bit depth. The supervisory data bit depth conversion unit 210 converts an unsigned integer type 16-bit into an unsigned integer type 8-bit using a preset lookup table, for example.

FIG. 3A is a lookup table used for bit depth conversion in the present embodiment. The values in FIG. 3A indicates a correspondence relationship of pixel values (luminance) at each bit depth. FIG. 3B is a tone curve applied in gradation change in a gradation change unit 214 described later. In FIG. 3B, the horizontal axis represents the luminance of an input image (image before conversion), and the vertical axis represents the luminance of an output image (image after conversion). The lookup table is created by reflecting a tone curve of 14-bit gradation and converting it into 8-bit gradation. For example, the 16-bit column on the left side of the lookup table in FIG. 3A is created based on the values in FIG. 3B. The 8-bit column on the right side of the lookup table of FIG. 3A is created based on a value in which the maximum value of the vertical axis of FIG. 3B is converted into 255, which is the maximum value of 8-bit. As illustrated in the tone curve of FIG. 3B and the lookup table of FIG. 3A, gradation is finely converted in a relatively low luminance region from a pixel value of 0 to a pixel value of about 4000, and gradation is roughly converted up to 16383, which is an upper limit value of 14-bit in a region in and after the low luminance region. FIGS. 3A and 3B illustrate that the resolution changes with respect to the pixel value. Therefore, by using the lookup table of FIG. 3A, the supervisory data bit depth conversion unit 210 converts the unsigned integer type 16-bit into the unsigned integer type 8-bit in accordance with the resolution for each pixel value. In the lookup table of FIG. 3A, a relatively low luminance region from a pixel value 0 to a pixel value of about 4000 is assigned with a number of 8-bit (0 to 256) more finely associated than that in other regions. That is, without uniform 256 quantization, the resolution is enhanced regarding a relatively low luminance region matching the characteristics of data. The gradation change unit 214 can convert an image with the resolution of gradation similar to a tone curve. Therefore, the supervisory data bit depth conversion unit 210 converts the bit depth of supervisory data based on the resolution corresponding to the resolution used for the gradation change by the gradation change unit 214, here, the same resolution. Here, the image data is 16-bit, but since it is originally a 14-bit RAW image, the pixel values is up to 16383 at a maximum. Therefore, there is no table having a value of more than 16383 in the lookup table. The supervisory data acquisition unit 204 finally outputs, to the weight determination unit 207 as supervisory data, an image in which an image of the unsigned integer type 16-bit is converted into an image of the unsigned integer type 8-bit in this lookup table.

Using the quantization parameter, the quantization unit 205 quantizes the output values such as the weights and the feature amounts of each layer of the NN learned by the learning unit 203. For example, the quantization unit 205 quantizes the weights and the output values to the same bit depth as the bit depth of the image data output by the supervisory data bit depth conversion unit 210. Therefore, in the present embodiment, the quantization unit 205 quantizes the weights and the output values into 8-bit. For details, a known NN quantization method may be applied, and description thereof will be omitted.

The information processing apparatus 3 executes inference processing on the RAW image by using the model of the NN learned by the information processing apparatus 2, and thereafter converts an image of an inference result having the bit depth changed into an image in a format such as a JPEG image, that is, develops the image. The information processing apparatus 3 includes an inference data acquisition unit 215, a quantization model acquisition unit 211, an inference data bit depth conversion unit 212, and a development unit 213. The inference data bit depth conversion unit 212 is an example of a depth conversion unit.

The inference data acquisition unit 215 acquires image data used for inference. For example, the inference data acquisition unit 215 acquires and passes, to the quantization model acquisition unit 211, an 8-bit or 16-bit RAW image.

The quantization model acquisition unit 211 acquires a model of the NN quantized by the quantization unit 205. For example, the quantization model acquisition unit 211 acquires a model of the NN including an 8-bit weight quantized by the quantization unit 205. The quantization model acquisition unit 211 executes inference processing on the RAW image acquired by the inference data acquisition unit 215 by the model of the NN having been acquired, and outputs an 8-bit image as an inference result.

The inference data bit depth conversion unit 212 executes depth conversion processing of converting, from an unsigned integer type 8-bit to an unsigned integer type 16-bit, an output value (e.g., pixel value of the image) of the quantized NN model acquired by the quantization model acquisition unit 211. The inference data bit depth conversion unit 212 converts the bit depth from the unsigned integer type 8-bit to the unsigned integer type 16-bit using the same lookup table as the lookup table used by the supervisory data bit depth conversion unit 210. Note that the lookup tables used for conversion of both bit depths may be substantially the same. Here, the supervisory data bit depth conversion unit 210 performs conversion from the "unsigned integer type 16-bit" column to the "unsigned integer type 8-bit" column in FIG. 3A, and the inference data bit depth conversion unit 212 performs conversion from the "unsigned integer type 8-bit" column to the "unsigned integer type 16-bit" column. In other words, the inference data bit depth conversion unit 212 executes the depth conversion processing in the reverse procedure to the supervisory data bit depth conversion unit 210.

The development unit 213 performs image processing such as gradation change on a RAW image, and finally converts the RAW image into an image in any format such as a JPEG image and a PNG image. For example, the development unit 213 performs format conversion on the unsigned integer type 16-bit RAW image in which the bit depth has been converted by the inference data bit depth conversion unit 212, and outputs a 16-bit image. The development unit 213 includes, for example, the gradation change unit 214. The gradation change unit 214 is an example of a data change unit.

The gradation change unit 214 performs gradation change processing in the development unit 213. The gradation change unit 214 executes gradation change processing on the 16-bit image using the tone curve illustrated in FIG. 3B.

The flowchart of FIG. 5 shows an example of a procedure of learning processing until the information processing apparatus 2 determines the weights of the NN in one learning process in the present embodiment. Hereinafter, processing content of the weight determination unit 207 of the learning unit 203 will be described with reference to the drawing.

In S501, the model acquisition unit 202 acquires and outputs, to the weight determination unit 207, the model of the NN.

In S502, the quantization parameter acquisition unit 206 acquires and outputs, to the weight determination unit 207, the quantization parameter q from the model acquisition unit 202.

In S503, the input data acquisition unit 201 acquires and outputs, to the weight determination unit 207, a mini-batch image of a learning data set as an unsigned integer type 16-bit input image.

In S504, the 16-bit supervisory data acquisition unit 209 acquires, as supervisory data, and outputs, to the supervisory data bit depth conversion unit 210, image data of the unsigned integer type 16-bit corresponding to the input image acquired in S503.

In S505, the supervisory data bit depth conversion unit 210 executes depth conversion processing of converting the bit depth for the supervisory data. For example, using the lookup table of FIG. 3A, the supervisory data bit depth conversion unit 210 converts supervisory data of the unsigned integer type 16-bit acquired from the 16-bit supervisory data acquisition unit 209 into the unsigned integer type 8-bit. The supervisory data bit depth conversion unit 210 outputs supervisory data of the unsigned integer type 8-bit to the weight determination unit 207.

In S506, the weight determination unit 207 performs, using the mini-batch image acquired from the input data acquisition unit 201, inference processing on the model of the NN acquired from the model acquisition unit 202. Using the inference result, the weight determination unit 207 calculates a loss (objective function) with supervisory data of the unsigned integer type 8-bit acquired from the supervisory data bit depth conversion unit 210.

In S507, the weight determination unit 207 calculates the gradient using the error back propagation method using the calculated loss, and calculates the update amounts of the weights of the model of the NN.

In S508, the weight determination unit 207 updates the weights of the NN based on the update amount weights having been calculated.

In S509, the weight determination unit 207 generates and outputs a model of the NN in which the weights is updated.

As described above, the information processing apparatus 2 repeats the processing in the procedure from S501 to S509 until the learning loss converges, and determines the weights of the model of the NN. Note that when the learning loss converges and the learning ends, the weight determination unit 207 outputs the model of the NN to the quantization unit 205. Using the quantization parameter, the quantization unit 205 quantizes the model of the NN acquired from the weight determination unit 207. For example, using the quantization parameter, the quantization unit 205 quantizes the weights and the feature amounts of the model of the NN acquired from the weight determination unit 207 to 8-bit.

The flowchart of FIG. 6 shows an example of the procedure from inference by the quantized NN model executed by the information processing apparatus 3 to development processing in the present embodiment.

In S601, the quantization model acquisition unit 211 acquires a model of the NN quantized to 8-bit, for example, by the quantization unit 205.

In S602, the inference data acquisition unit 215 acquires and outputs, to the quantization model acquisition unit 211, a RAW image of the unsigned integer type 16-bit, for example, for inference as an input image. By this, the model of the NN acquired by the quantization model acquisition unit 211 executes inference processing on the image for inference acquired by the inference data acquisition unit 215. The model of the NN outputs an unsigned integer type 8-bit image as an inference result to the inference data bit depth conversion unit 212.

In S603, the inference data bit depth conversion unit 212 executes depth conversion processing of converting the bit depth on the inference result of the model of the NN having been quantized. For example, by depth conversion processing using the lookup table of FIG. 3A, the inference data bit depth conversion unit 212 converts the unsigned integer type 8-bit image output from the model of the NN into an unsigned integer type 16-bit image.

In S604, the development unit 213 performs development processing on the unsigned integer type 16-bit image, and converts the image into any image format such as a JPEG image and a PNG image. In this conversion processing, the gradation change unit 214 performs gradation change using the tone curve of FIG. 3B.

As described above, the information processing apparatus 3 performs from inference to development processing by the quantized NN model after learning in the procedure of S601 to S604.

(Effects of Present Embodiment)

The unsigned integer type 16-bit image output from the inference data bit depth conversion unit 212 is finally subjected to gradation processing by the tone curve of FIG. 3B in the development processing of the development unit 213, and is converted into an image in a format such as a JPG image and a PNG image. Since the unsigned integer type 16-bit image output from the inference data bit depth conversion unit 212 is generated by converting an unsigned integer type 8-bit image using a lookup table, there are only 256 gradations in actual gradation. Since the gradation of the 14-bit RAW image is reduced to 256 gradations, image quality originally deteriorates. However, in the present embodiment, since the lookup table corresponds to the tone curve of FIG. 3B, deterioration is reduced in an image such as a JPEG image and PNG image having been developed. The reason will be described below.

The supervisory data bit depth conversion unit 210 converts the pixel values in accordance with the resolution with respect to the pixel values in the processing of converting unsigned integer type 16-bit data into unsigned integer type 8-bit data. Specifically, in the bit depth conversion processing, the supervisory data bit depth conversion unit 210 generates supervisory data by performing conversion with a fine gradation in a low luminance region requiring fine gradation at the time of development and performing conversion with a rough gradation in a low luminance region and thereafter. Then, the model of the NN performs learning so as to output an unsigned integer type 8-bit image with similar gradation using 8-bit supervisory data where the bit depth is converted. When converting the unsigned integer type 8-bit image output from the model of the NN into the unsigned integer type 16-bit, the inference data bit depth conversion unit 212 converts the image into an unsigned integer type 16-bit by a reverse procedure using a similar lookup table. Therefore, the gradation of the low luminance region of the unsigned integer type 16-bit data converted by the inference data bit depth conversion unit 212 becomes fine, and corresponds to the gradation of the tone curve of the development processing after the inference processing. As a result, fine gradation is maintained in a fine gradation change part in the gradation processing of the tone curve, and deterioration of final image quality can be suppressed.

Note that in the present embodiment, in order to explain a general development processing procedure in which the development unit 213 performs development processing on a 16-bit image, an example has been described in which after the inference data bit depth conversion unit 212 converts unsigned integer type 8-bit data into unsigned integer type 16-bit data, the development unit 213 performs the development processing. However, if the development unit 213 has specifications of processing data of unsigned integer type 8-bit, it is possible to obtain the effects of the present proposal even if the inference data bit depth conversion unit 212 and the gradation change unit 214 do not exist.

In the present embodiment, after learning of the model of the NN having the quantization parameter, the quantization unit 205 performs 8-bit quantization on the model of the NN. However, even if after learning of the normal NN model having no quantization parameter, the quantization unit 205 performs 8-bit quantization on the model of the NN, it is possible to obtain the effects of the present proposal. Even if the model of the NN already quantized to 8-bit learns 8-bit as it is, it is possible to obtain the effects of the present proposal.

Second Embodiment

In the first embodiment described earlier, the lookup table is used for the bit depth conversion processing of the supervisory data bit depth conversion unit 210, but an equation may be used.

FIG. 7B is a tone curve used for the gradation processing of the gradation change unit 214 in the present embodiment, and is a graph of Equation (1).

[Equation 1]

$$y = x^{1/2.2} \quad (1)$$

Since the target of the gradation processing is an unsigned integer type 16-bit image, the value calculated by Equation (1) is converted into an integer value.

FIG. 7A is a graph of Equation (2) when the supervisory data bit depth conversion unit 210 according to the present embodiment converts an unsigned integer type 16-bit image into an unsigned integer type 8-bit image.
[Equation 2]

$$y = (x/16383)^{1/2.2} * 255 \quad (2)$$

Equation (2) is an equation for converting the pixel value in accordance with the resolution with respect to the pixel value (luminance) in a case where a 16-bit image is converted into an 8-bit image by the bit depth conversion processing. Since Equation (2) is an equation for converting an unsigned integer type 16-bit integer value into am unsigned integer type 8-bit integer value, the unsigned integer type 16-bit image is converted into the unsigned integer type 8-bit image by Equation (2). Since the unsigned integer type 16-bit image is originally an image in which a 14-bit RAW image is type-converted, the maximum value of x in Equation (2) is 16383. As seen by comparing Equations (1) and (2), use of Equation (2) enables the supervisory data bit depth conversion unit 210 to convert the unsigned integer type 16-bit image into the unsigned integer type 8-bit image, while enabling the gradation change unit 214 to convert the image with the resolution of the gradation similar to that of the tone curve of Equation (1) of the present embodiment.

FIG. 7C is a graph of Equation (3) when the inference data bit depth conversion unit 212 according to the present embodiment converts an unsigned integer type 8-bit image into an unsigned integer type 16-bit image.
[Equation 3]

$$y = (x/255)^{2.2} * 16383 \quad (3)$$

Equation (3) is an equation for converting the pixel value in accordance with the resolution with respect to the pixel value (luminance) in a case where an 8-bit image is converted into a 16-bit image by the bit depth conversion processing. Since Equation (3) is an equation for converting an unsigned integer type 8-bit integer value into an unsigned integer type 16-bit integer value, the integer value of the unsigned integer type 8-bit image is converted into the unsigned integer type 16-bit integer value. Since the unsigned integer type 16-bit image is assumed to be an image in which a 14-bit RAW image is type-converted, the calculation value of Equation (3) takes only a value of 16383 at a maximum. Since Equation (3) is an inverse function of Equation (1), use of Equation (3) enables the inference data bit depth conversion unit 212 to convert the unsigned integer type 8-bit image into the unsigned integer type 16-bit image, while enabling the gradation change unit 214 to convert the image with the resolution of the gradation similar to that of the tone curve of Equation (1) of the present embodiment.

As described above, according to the present embodiment, the effects of the present proposal can be obtained also by performing, with an equation, the bit depth conversion of the supervisory data bit depth conversion unit 210 and the inference data bit depth conversion unit 212.

Note that the equations and the lookup tables of the supervisory data bit depth conversion unit 210 and the inference data bit depth conversion unit 212 may be acquired by learning.

In the embodiments of the present proposal, the luminance of the image has been described as a processing target, but the present invention is also applicable to a frequency, and is also applicable to processing of voice other than the image, a regression task, and the like.

The above-described embodiments may be combined. For example, the user may be allowed to select the lookup table of the first embodiment and the equation of the second embodiment.

In the above-described embodiments, the 8-bit and 16-bit images have been described, but the bit number of an image may be appropriately changed.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An information processing apparatus configured to process target data by a neural network, the information processing apparatus comprising:

   an input data acquisition means configured to acquire the target data;
   a supervisory data acquisition means configured to acquire supervisory data; and
   a learning means configured to perform learning so as to reduce an error between output data obtained by inputting, to the neural network, and processing the target data and the supervisory data, and updates a parameter of the neural network,
   wherein the supervisory data acquisition means acquires the supervisory data subjected to depth conversion processing of converting a value of the supervisory data with a resolution matching a characteristic of the target data in a case where a bit depth of the supervisory data is a second bit depth smaller than a first bit depth of the target data.

2. The information processing apparatus according to claim 1 further comprising a quantization means configured to quantize the neural network having a parameter updated by the learning means.

3. The information processing apparatus according to claim 2 further comprising

   a quantization parameter acquisition means configured to acquire a quantization parameter of the neural network,
   wherein the quantization means quantizes the neural network based on the quantization parameter.

4. The information processing apparatus according to claims 2 or 3, wherein the learning means updates a parameter of the quantized neural network.

5. The information processing apparatus according to any one of claims 1 to 4 further comprising:

   a depth conversion means configured to convert a value of the target data in a reverse procedure to the depth conversion processing in a case of converting a bit depth of target data inferred by the neural network from the second bit depth to the first bit depth; and
   a data change means configured to change a value of the target data of the first bit depth in accordance with a resolution.

6. The information processing apparatus according to claim 5, wherein
   a value of the target data is changed based on a resolution corresponding to a resolution used by the data change means in the depth conversion processing.

7. The information processing apparatus according to any one of claims 1 to 6, wherein
   the supervisory data acquisition means changes a value of the target data using a lookup table reflecting a resolution matching a characteristic of the value of the target data.

8. The information processing apparatus according to any one of claims 1 to 7, wherein
   the supervisory data acquisition means changes a value of the supervisory data by an equation corresponding to a resolution of a value of the target data.

9. The information processing apparatus according to claim 2, wherein

the quantization means quantizes the neural network to the second bit depth.

**10.** The information processing apparatus according to any one of claims 1 to 9, wherein the target data and the supervisory data are image data.

**11.** The information processing apparatus according to any one of claims 1 to 10, wherein the supervisory data acquisition means acquires, by learning, conversion of a value of the supervisory data corresponding to the resolution.

**12.** An information processing method of processing target data by a neural network, the information processing method comprising:

acquiring the target data;
acquiring supervisory data;
performing learning so as to reduce an error between output data obtained by inputting, to the neural network, and processing the target data and the supervisory data, and updating a parameter of the neural network; and
in acquisition of the supervisory data, acquiring the supervisory data subjected to depth conversion processing of converting a value of the supervisory data with a resolution matching a characteristic of the target data in a case where a bit depth of the supervisory data is a second bit depth smaller than a first bit depth of the target data.

**13.** A non-transitory computer-readable storage medium storing a computer program for, when read and executed by, a computer that processes target data by a neural network, the computer

acquires the target data;
acquires supervisory data;
performs learning so as to reduce an error between output data obtained by inputting, to the neural network, and processing the target data and the supervisory data, and updates a parameter of the neural network; and
in acquisition of the supervisory data, acquires the supervisory data subjected to depth conversion processing of converting a value of the supervisory data with a resolution matching a characteristic of the target data in a case where a bit depth of the supervisory data is a second bit depth smaller than a first bit depth of the target data.

FIG. 1

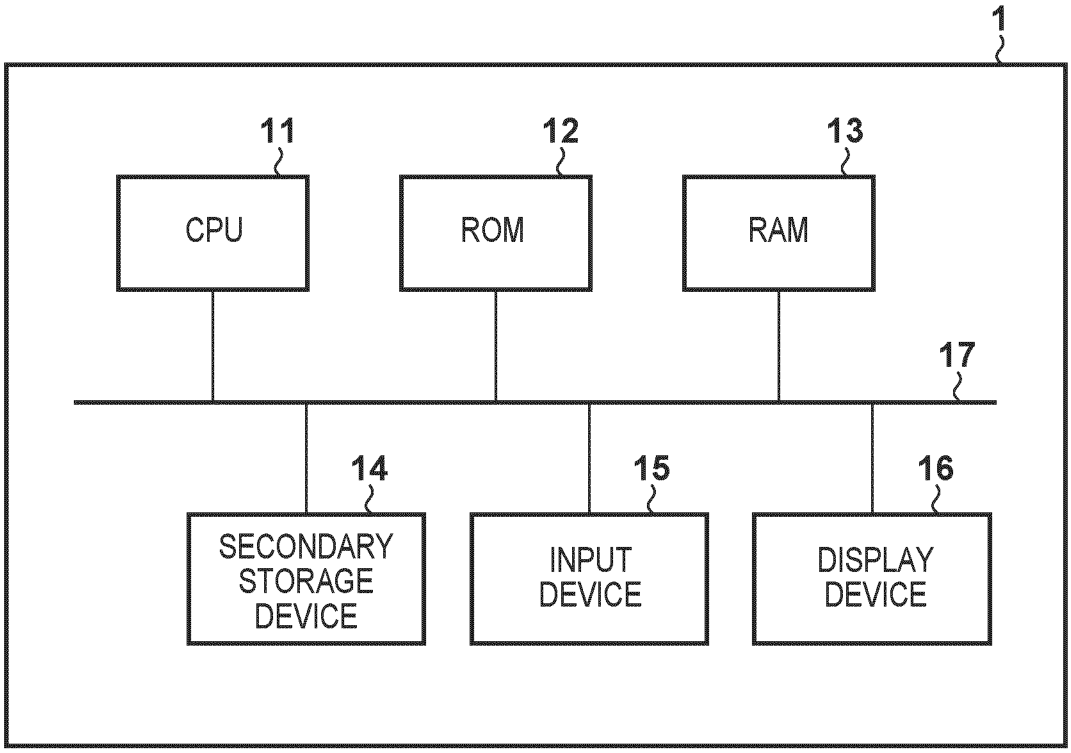
1
11
CPU
12
ROM
13
RAM
17
14
SECONDARY STORAGE DEVICE
15
INPUT DEVICE
16
DISPLAY DEVICE

FIG. 2

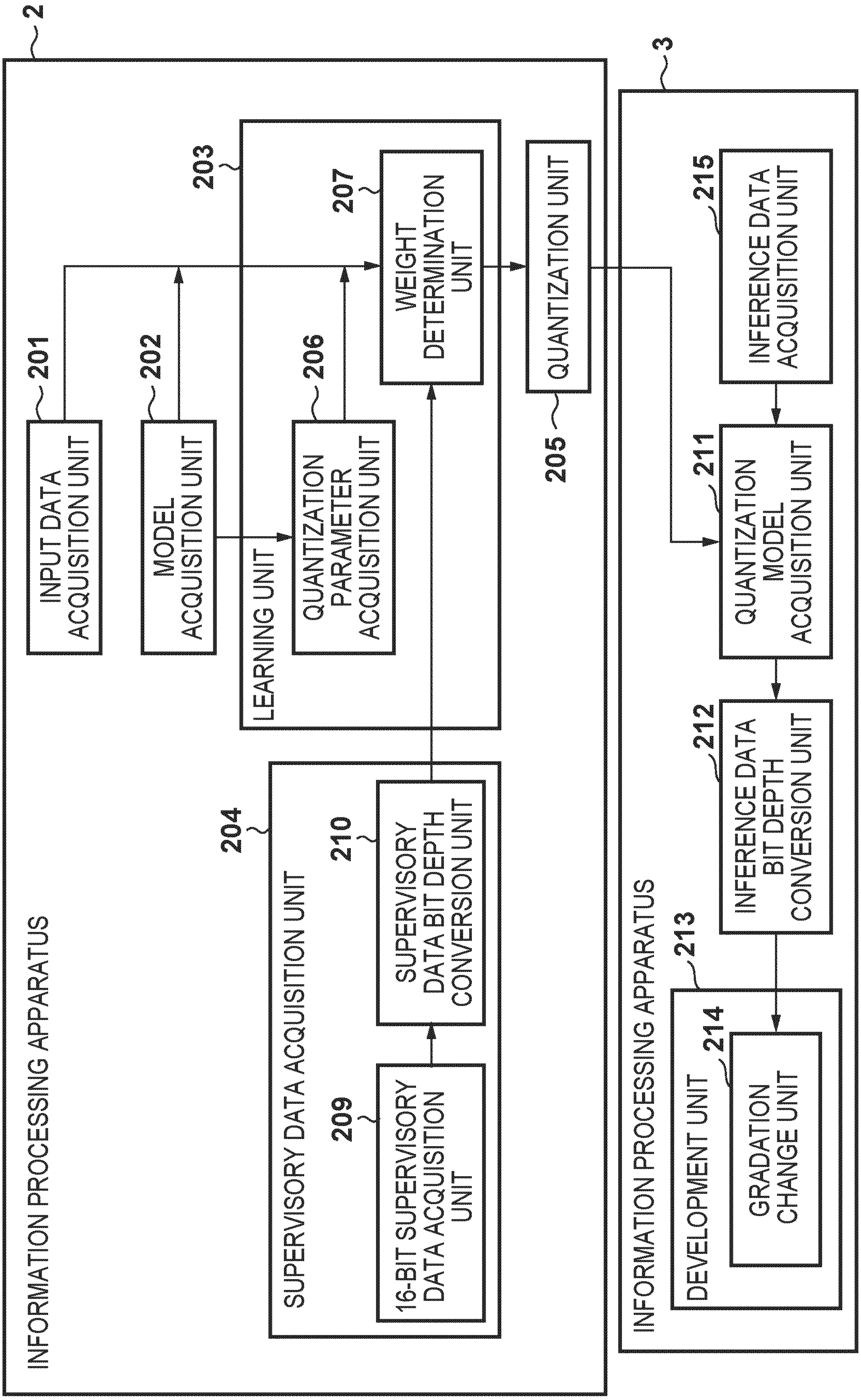
2
INFORMATION PROCESSING APPARATUS
201
INPUT DATA ACQUISITION UNIT
202
MODEL ACQUISITION UNIT
203
LEARNING UNIT
206
QUANTIZATION PARAMETER ACQUISITION UNIT
207
WEIGHT DETERMINATION UNIT
204
SUPERVISORY DATA ACQUISITION UNIT
209
16-BIT SUPERVISORY DATA ACQUISITION UNIT
210
SUPERVISORY DATA BIT DEPTH CONVERSION UNIT
205
QUANTIZATION UNIT
3
INFORMATION PROCESSING APPARATUS
215
INFERENCE DATA ACQUISITION UNIT
211
QUANTIZATION MODEL ACQUISITION UNIT
212
INFERENCE DATA BIT DEPTH CONVERSION UNIT
213
DEVELOPMENT UNIT
214
GRADATION CHANGE UNIT

F I G. 3A

| UNSIGNED INTEGER TYPE 16-bit | UNSIGNED INTEGER TYPE 8-bit |
|---|---|
| 0 | 0 |
| 1 | 1 |
| 2 | 2 |
| 3 | 2 |
| 4 | 3 |
| 5 | 3 |
| 6 | 4 |
| ⋮ | |
| 16312 | 254 |
| 16313 | 255 |
| ⋮ | |
| 16383 | 255 |

F I G. 3B

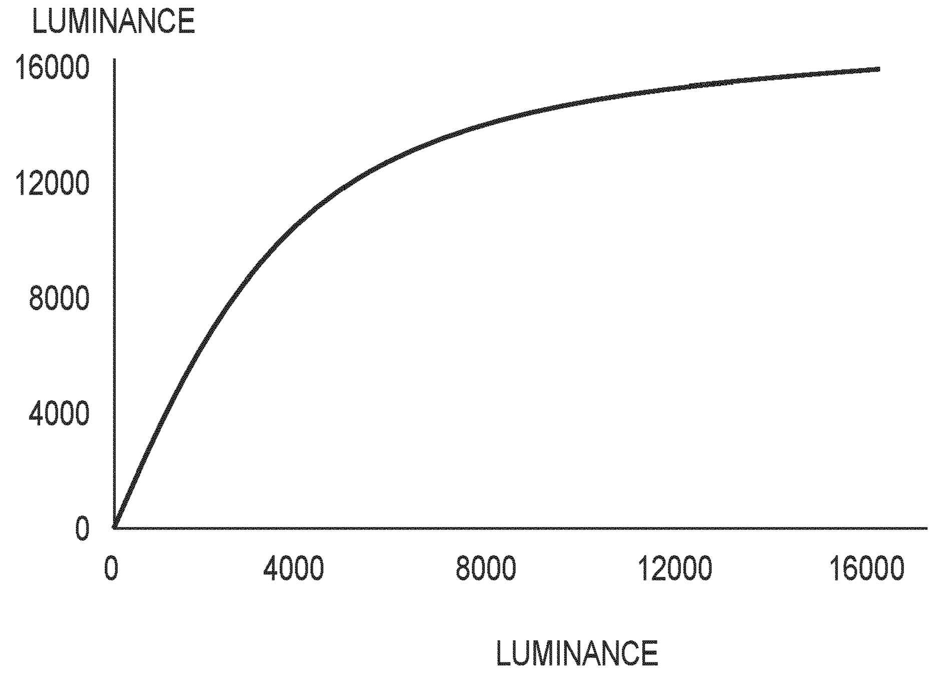

FIG. 4

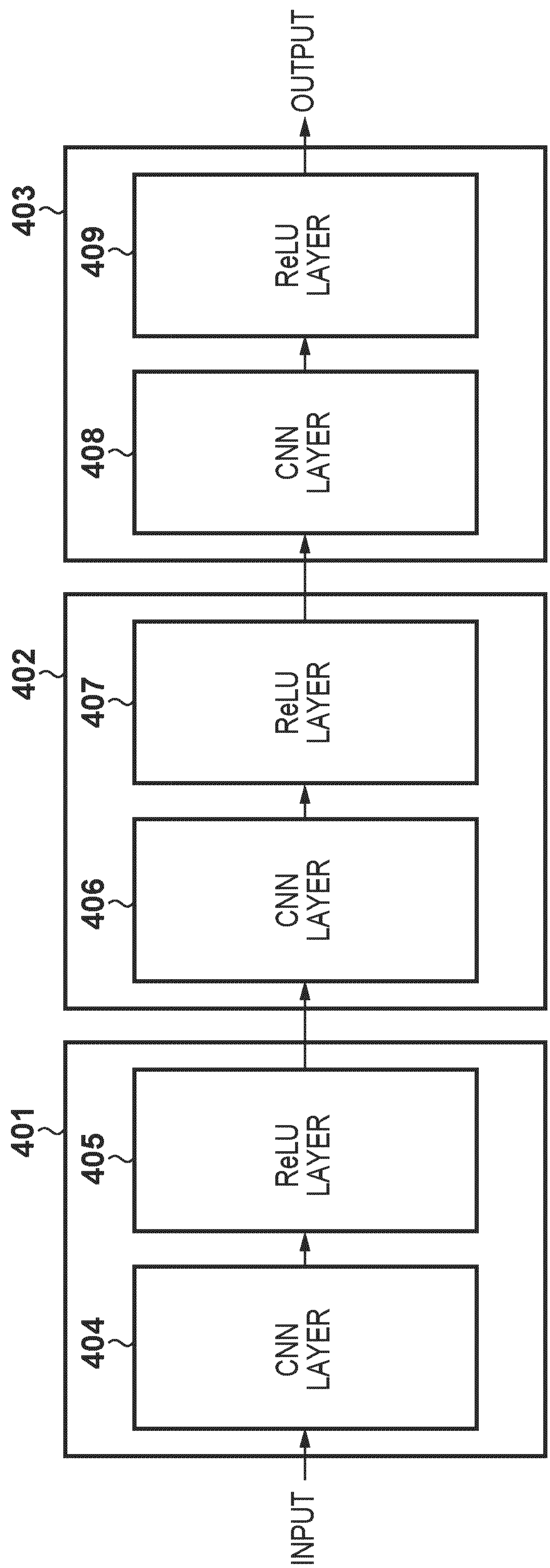
INPUT
401
404
CNN LAYER
405
ReLU LAYER
402
406
CNN LAYER
407
ReLU LAYER
403
408
CNN LAYER
409
ReLU LAYER
OUTPUT

FIG. 5

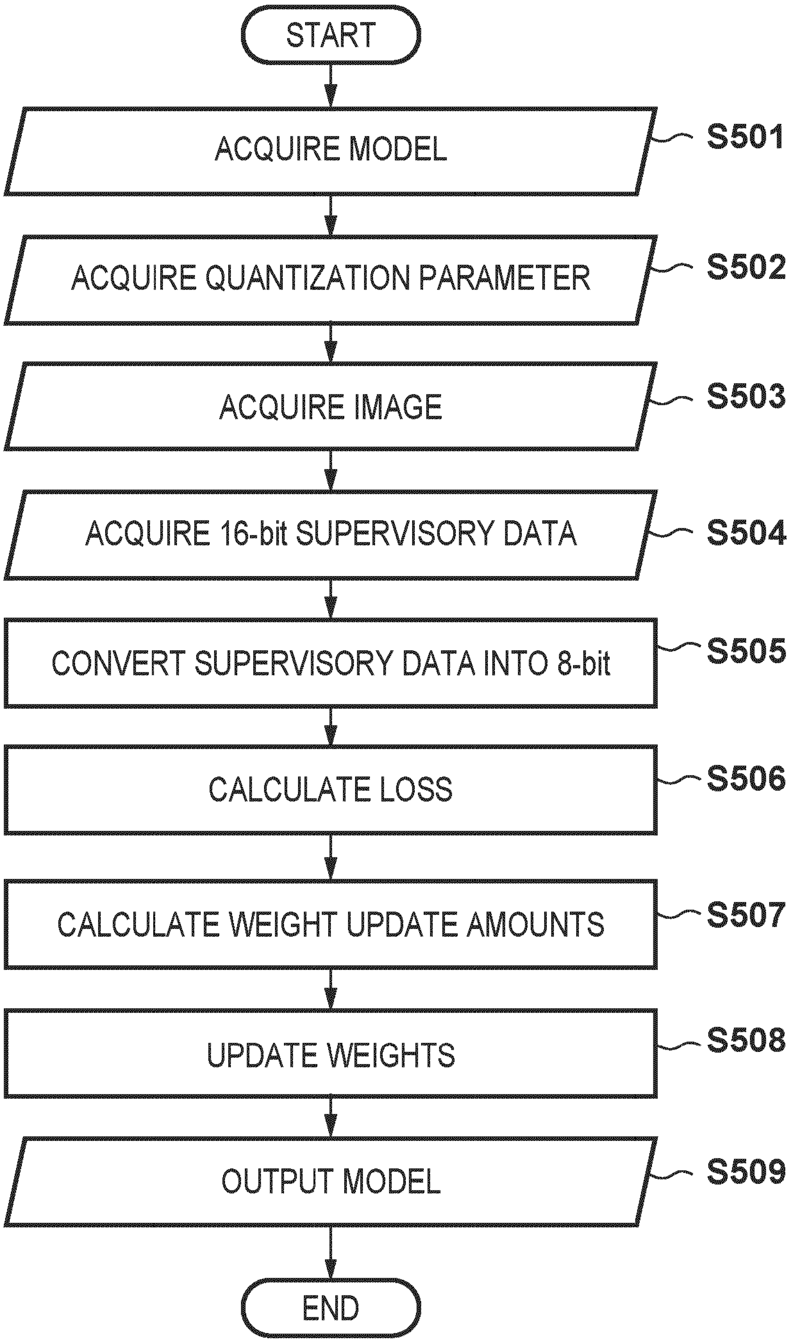
START
ACQUIRE MODEL
S501
ACQUIRE QUANTIZATION PARAMETER
S502
ACQUIRE IMAGE
S503
ACQUIRE 16-bit SUPERVISORY DATA
S504
CONVERT SUPERVISORY DATA INTO 8-bit
S505
CALCULATE LOSS
S506
CALCULATE WEIGHT UPDATE AMOUNTS
S507
UPDATE WEIGHTS
S508
OUTPUT MODEL
S509
END

F I G. 6

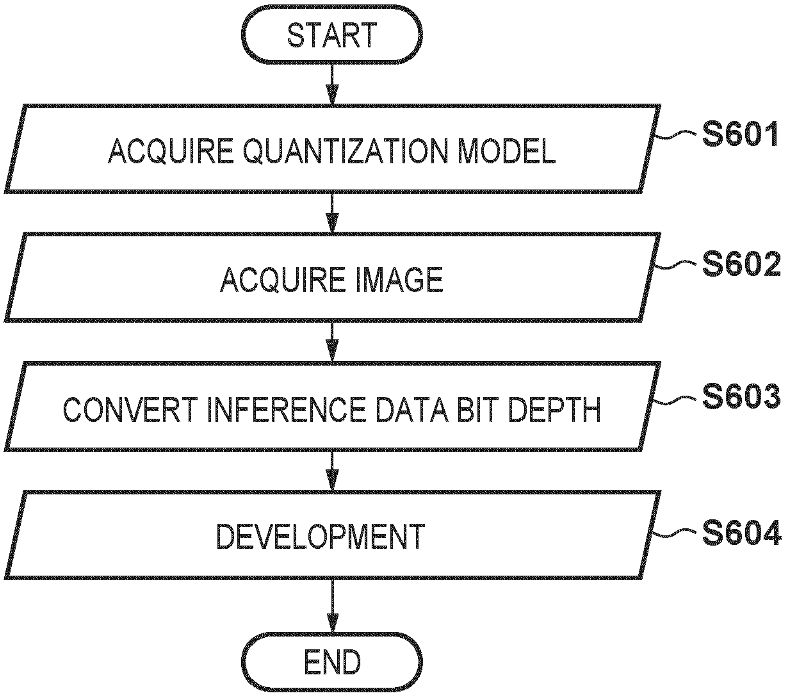
START
ACQUIRE QUANTIZATION MODEL
S601
ACQUIRE IMAGE
S602
CONVERT INFERENCE DATA BIT DEPTH
S603
DEVELOPMENT
S604
END

F I G. 7A

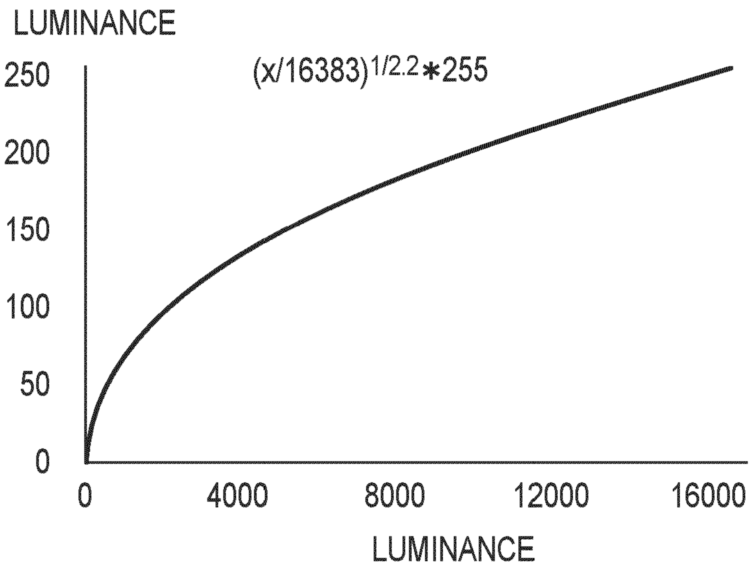
LUMINANCE
(x/16383)^1/2.2*255
250
200
150
100
50
0
0
4000
8000
12000
16000
LUMINANCE

# FIG. 7B

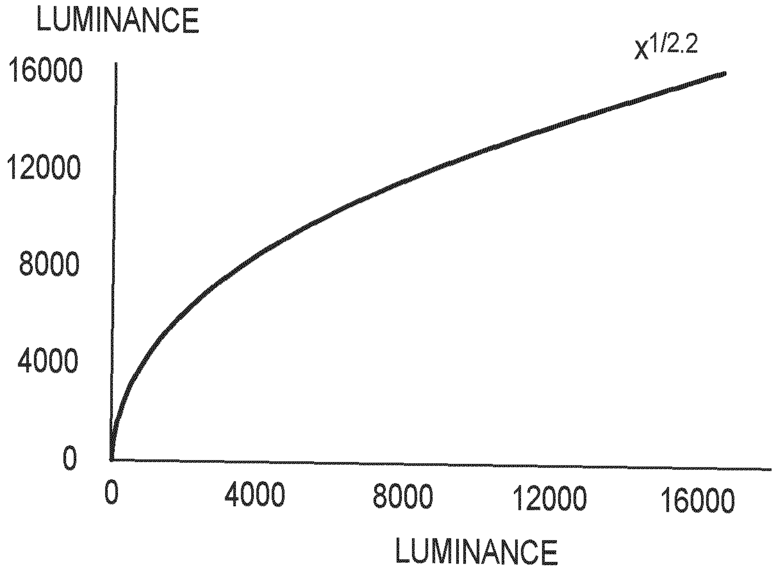
LUMINANCE
16000
12000
8000
4000
0
$x^{1/2.2}$
0
4000
8000
12000
16000
LUMINANCE

# FIG. 7C

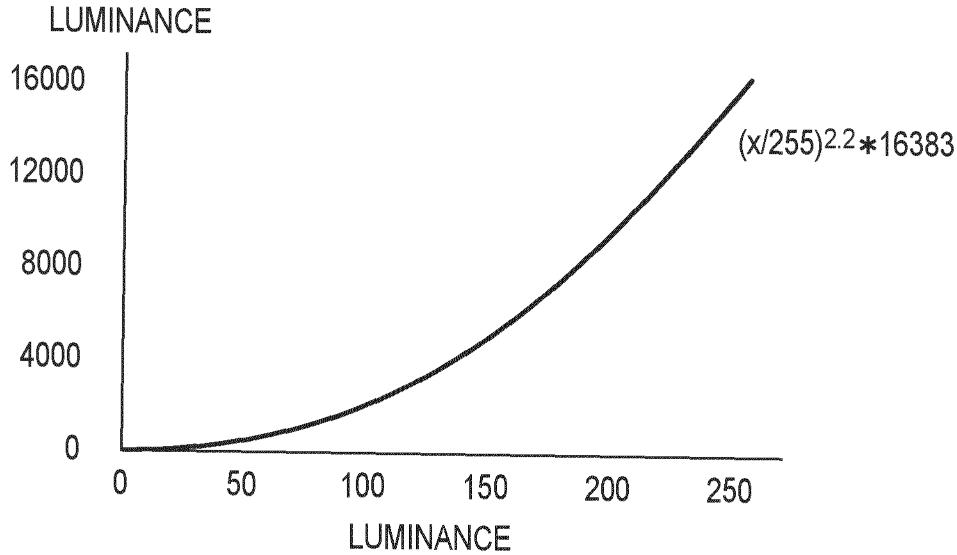
LUMINANCE
16000
12000
8000
4000
0
$(x/255)^{2.2}*16383$
0
50
100
150
200
250
LUMINANCE

Europäisches Patentamt
European Patent Office
Office européen des brevets

# EUROPEAN SEARCH REPORT

Application Number
EP 24 22 0150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/006556 A1 (BLINKAI TECH INC [US]) 6 January 2022 (2022-01-06) * pages 6-7, 9, 14-15, 20, 22-24, 54-55; figure 9 * ----- | 1-13 | INV. G06N3/0495 G06N3/09 ADD. G06T5/60 G06T5/70 |

| TECHNICAL FIELDS SEARCHED (IPC) |
|---|
| G06N<br>G06T<br>G06V |

The present search report has been drawn up for all claims

| Place of search | Date of completion of the search | Examiner |
|---|---|---|
| The Hague | 1 May 2025 | Keane, Shane |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 22 0150

This annex lists the patent family members relating to the patent documents cited in the above-mentioned European search report. The members are as contained in the European Patent Office EDP file on
The European Patent Office is in no way liable for these particulars which are merely given for the purpose of information.

01-05-2025

| Patent document cited in search report | Publication date | Patent family member(s) | Publication date |
|---|---|---|---|
| WO 2022006556 A1 | 06-01-2022 | CN 117916765 A | 19-04-2024 |
| | | EP 4154171 A1 | 29-03-2023 |
| | | JP 2023532228 A | 27-07-2023 |
| | | KR 20230034302 A | 09-03-2023 |
| | | US 2022004798 A1 | 06-01-2022 |
| | | WO 2022006556 A1 | 06-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Restormer: Efficient Transformer for High-Resolution Image Restoration. Inception Institute of AI, 13 December 2023
- **KAIMING HE** ; **XIANGYU ZHANG** ; **SHAOQING REN** ; **JIAN SUN**. Delving Deep into Rectifiers: Surpassing Human-Level Performance on ImageNet Classification. *Proceedings of the IEEE International Conference on Computer Vision (ICCV)*, 2015, 1026-1034, https://arxiv.org/pdf/1502.01852.pdf>